# EUROPÄISCHE PATENTSCHRIFT

(11) **EP 0 744 988 B1**
(45) Veröffentlichungstag und Bekanntmachung des Hinweises auf die Patenterteilung: **31.05.2000**
(21) Anmeldenummer: 95906898.2
(22) Anmeldetag: 02.02.1995
(51) Int. Cl.: B01D 53/32, B01D 53/22

(54) **VORRICHTUNG UND VERFAHREN ZUR REDUZIERUNG VON SCHADSTOFFEN IN VERBRENNUNGSABGASEN**
DEVICE AND PROCESS FOR REDUCING THE QUANTITY OF POLLUTANTS IN COMBUSTION EXHAUST GASES
PROCEDE ET DISPOSITIF PERMETTANT DE REDUIRE LE VOLUME DE POLLUANTS CONTENUS DANS DES GAZ D'ECHAPPEMENT ISSUS DE LA COMBUSTION

(30) Priorität: 15.02.1994 DE 4404681
(43) Veröffentlichungstag der Anmeldung: 04.12.1996
(73) Patentinhaber: ROBERT BOSCH GMBH, 70442 Stuttgart (DE)
(72) Erfinder: DIETERICH, Klaus, D-70569 Stuttgart (DE); BLANKENHORN, Wolfgang, D-73760 Ostfildern (DE)
(86) Internationale Anmeldenummer: DE9500128
(87) Internationale Veröffentlichungsnummer: WO9521684

(56) Entgegenhaltungen:
- EP-A- 0 358 110
- EP-A- 0 458 217
- WO-A-93/16966
- DE-A- 4 201 423
- US-A- 3 739 553
- US-A- 4 713 152

## Beschreibung

Die Erfindung betrifft eine Vorrichtung zur Reduzierung von Schadstoffen in Verbrennungsabgasen nach dem Oberbegriff des Anspruches 1 und ein Verfahren zur Reduzierung von Schadstoffen in Verbrennungsabgasen nach dem Oberbegriff des Anspruches 8.

### Stand der Technik

Es ist bekannt, daß bei Verbrennungsprozessen der Sauerstoff der Luft genutzt wird. So wird beispielsweise bei Verbrennungskraftmaschinen in Kraftfahrzeugen ein Kraftstoff-Luft-Gemisch erzeugt, daß mit Hilfe eines Zündmittels gezündet wird, um mit der Verbrennungskraftmaschine die Antriebs energie für das Kraftfahrzeug zu gewinnen. Während dieses Verbrennungsprozesses entstehen eine Reihe von Verbrennungsabgasen, die sich aus dem Kraftstoff und der Luft ergeben. Die sich aus dem Kraftstoff ergebenden Verbrennungsabgase werden in der Regel mittels eines Katalysators zu großen Teilen abgeschieden, so daß eine Umweltbelastung vermindert wird. Durch die Verwendung von Luft entstehen auf Grund des Stickstoffanteils der Luft bei dem Verbrennungsprozeß Stickoxide. Diese lassen sich mit einem Katalysator wirtschaftlich nur schwer beseitigen und stellen somit eine erhebliche Umweltbelastung dar. Darüber hinaus läßt die Stickoxidbildung keine Optimierung der Verbrennung im Maggerbereich der Verbrennungskraftmaschine zu.

### Vorteile der Erfindung

Die erfindungsgemäße Vorrichtung zur Reduzierung von Schadstoffen in Verbrennungsabgasen mit den im Anspruch 1 genannten Merkmalen bietet demgegenüber den Vorteil, daß bei Verbrennungsprozessen, die unter Luftzufuhr ablaufen, der Luftstickstoff der Verbrennung nicht zugeführt wird und hierdurch die Entstehung von Stickoxiden im Verbrennungsabgas vermieden wird. Dadurch, daß einem mit einer Verbrennungskammer verbundenen Abgaskanal wenigstens ein das Sauerstoff-Stickstoff-Luftgemisch führender Kanal zugeordnet ist, der mit einem Frischluftanschluß und einem Abluftanschluß versehen ist und dessen Mantel für den Sauerstoff des SauerstoffStickstoff-Luftgemisches durchlässig ist, wird in vorteilhafter Weise erreicht, daß die Verbrennung weiterhin unter Zufuhr von der Umgebungsluft entnommenem Luftsauerstoff durchgeführt werden kann, während der in der Umgebungsluft vorhandene Luftstickstoff nicht mit den der Verbrennungskammer zugeführten Verbrennungsabgasen in Verbindung kommt.

In vorteilhafter Ausgestaltung der Erfindung ist vorgesehen, daß der Mantel aus einem sauerstoffionenleitenden Material besteht, der vorzugsweise mit einer Spannungsquelle verbunden ist. Die Sauerstoffionen des Luftsauerstoffs können dabei durch den Mantel des das Sauerstoff-Stickstoff- Luftgemisch führenden Kanals durchtreten, während der Mantel für den Luftstickstoff eine unüberwindbare Barriere darstellt. Durch das Anlegen einer entsprechend gepolten Spannung kann der Transport der Sauerstoffionen durch den Mantel des Kanals sehr vorteilhaft verbessert werden, so daß gegebenenfalls auf die Sauerstoffkonzentration in dem Verbrennungsprozeß über eine wählbare Spannung Einfluß genommen werden kann.

Das erfindungsgemäße Verfahren zur Reduzierung von Schadstoffen bietet den Vorteil, daß die Verbrennungsprozesse, wie bekannt, unter Zufuhr von Luftsauerstoff durchgeführt werden können und der Schadstoffe hervorrufende Luftstickstoff von dem Verbrennungsprozeß ferngehalten werden kann, ohne daß komplizierte und damit teure Verfahrensschritte eingehalten werden müssen.

In bevorzugter Ausgestaltung des Verfahrens ist vorgesehen, daß das Sauerstoff-Stickstoff-Luftgemisch durch ein sauerstoffspeicherndes Rohrsystem geführt wird und anschließend dieses Rohrsystem mit dem Verbrennungsabgas gespült wird. Hierbei wird vorteilhafter Weise erreicht, daß während des Durchleitens des Sauerstoff-Stickstoff-Luftgemisches Sauerstoff in dem Rohrsystem gespeichert werden kann, während der Luftstickstoff, ohne irgendwelche Bindungen einzugehen, durch das Rohrsystem hindurch geleitet wird. Bei dem anschließenden Spülen mit dem Verbrennungsabgas wird der gespeicherte Sauerstoff von diesem aufgenommen und somit dem Verbrennungsprozeß zugeführt, während der Stickstoff von diesem ferngehalten wird.

Weitere vorteilhafte Ausgestaltungen der Erfindung ergeben sich aus den übrigen in den Unteransprüchen genannten Merkmalen.

### Zeichnungen

Die Erfindung wird nachfolgend in Ausführungs-beispielen anhand der zugehörigen Zeichnungen näher erläutert. Es zeigen:
- Figur 1: schematisch die Anordnung einer stickoxidfreien Verbrennung in einer Verbrennungskraftmaschine und
- Figur 2: schematisch eine Vorrichtung zum Abtrennen von Luftsauerstoff aus einem Sauerstoff-Stickstoff-Luftgemisch (Atmosphäre).

### Beschreibung der Äusführungsbeispiele

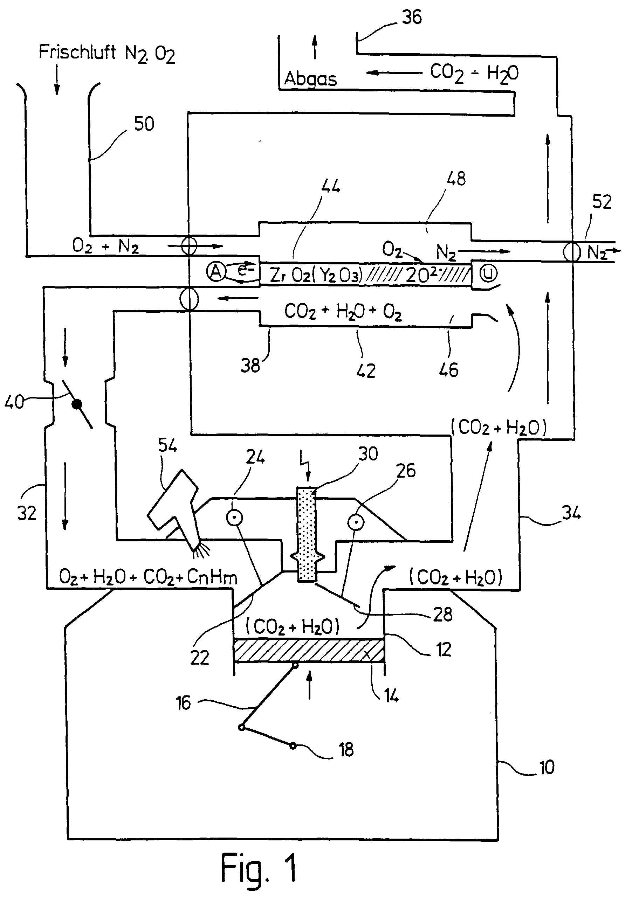

In Figur 1 ist schematisch eine Verbrennungskraftmaschine 10 gezeigt. Die Verbrennungskraftmaschine 10 besitzt wenigstens einen Zylinder 12, in dem ein Kolben 14 geführt ist, der über eine Pleuelstange 16 mit einer Kurbelwelle 18 verbunden ist. Der Zylinder 12 weist ein Einlaßventil 22 auf, das über eine erste Nockenwelle 24 betätigbar ist. Über eine zweite Nockenwelle 26 ist ein Auslaßventil 28 betätigbar. Dem Zylinder 12 ist weiterhin eine Zündquelle 30, beispielsweise eine Zündkerze, zugeordnet. Der Verbrennungskraftmaschine 10 ist ein Saugkanal 32 und ein Abgaskanal 34 zugeordnet. Der Abgaskanal 34 mündet einerseits in einem Auslaß 36 und andererseits in einem mit dem Saugkanal 32 verbundenen Kanal 38. Innerhalb des Saugkanals 32 ist eine Drosselklappe 40 angeordnet. Dem Saugkanal 32 ist weiterhin ein Kraftstoff-Einspritzventil 54 zugeordnet. Der Kanal 38 besitzt eine Erweiterung 42, innerhalb der eine Zwischenwand 44 angeordnet ist, die die Erweiterung 42 in eine erste Kammer 46 und eine zweite Kammer 48 unterteilt. Die Kammer 46 mündet dabei in dem Saugkanal 32. Die Kammer 48 ist mit einem Frischluftanschluß 50 und einem Abluftanschluß 52 versehen. Sowohl der Frischluftanschluß 50 als auch der Abluftanschluß 52 besitzen keine Verbindung zu dem Abgaskanal 34 und sind gegebenenfalls durch diesen abgedichtet hindurchgeführt. Die die Kammern 46 und 48 voneinander trennende Zwischenwand 44 besteht beispielsweise aus Zirkonoxid ZrO₂ (Y₂O₃). Die Zwischenwand 44 ist mit einer hier mit U gekennzeichneten Spannungsquelle verbunden.

Die in Figur 1 gezeigte Anordnung übt folgende Funktionen aus:

Beim Betrieb der Verbrennungskraftmaschine 10 wird innerhalb des Zylinders 12 ein Kraftstoff-Luft-Gemisch verdichtet und durch die Zündquelle 30 gezündet. Das Einspritzen des Kraftstoff-Luft-Gemisches sowie das Verdichten und Zünden dieses Gemisches geschieht in allgemein bekannter Weise und soll hier nicht näher erläutert werden. Durch das Zünden des Luft-Kraftstoff-Gemisches erfolgt eine explosionsartige Verbrennung, infolgedessen ein Abgas entsteht, das als wesentliche Bestandteile Kohlendioxid CO₂ und Wasser H₂O enthält. Dieses Abgas wird bei geöffneten Auslaßventil 28 in den Abgaskanal 34 ausgestoßen. Von hier gelangt es zum einen Teil in den Auslaß 36 und zum anderen Teil in die Kammer 46 der Erweiterung 42. Von dort wird es entsprechend der Stellung der Drosselklappe 40 über den Saugkanal 32 wieder den Zylinder 12 bei geöffnetem Einlaßventil 22 zugeführt. Zuvor wird diesem Abgas über das Einspritzventil 54 zur Herstellung einer explosiven Mischung der Kraftstoff zugemischt. Die Einzelheiten hierzu sind ebenfalls allgemein bekannt und sollen nicht erläutert werden.

Da der Verbrennungsprozeß nur unter Anwesenheit von Sauerstoff O₂ stattfinden kann, wird üblicherweise für das Kraftstoff-Luft-Gemisch Umgebungsluft (Atmosphäre) verwendet. Hierbei wird der in der Atmosphäre vorhandene Luftsauerstoff für den Verbrennungsprozeß verwertet. Wie bereits im Stand der Technik erwähnt, entstehen jedoch zusätzlich durch den Luftstickstoff während des Verbrennungsprozesses Stickoxide, die zu einer zusätzlichen Umweltbelastung führen.

Erfindungsgemäß wird die Atmosphäre über den Frischluftanschluß 50 in die Kammer 48 der Erweiterung 42 geleitet. Die Zwischenwand 44 der Erweiterung ist aus einem Sauerstoffionen 2O²⁻leitendem Material, so daß der Luftsauerstoff O² aus der Atmosphäre durch die Zwischenwand 44 in die Kammer 46 diffundieren kann. Die durch die Zwischenwand 44 durchdiffundierten Sauerstoffionen bilden in der Kammer 46 mit dem Abgas ein Gemisch aus Abgas und Sauerstoff O₂. Dieses Gemisch wird über den Saugkanal 32, nach vorherigem Einspritzen von Kraftstoff über das Einspritzventil 54, dem Zylinder 12 zugeführt und kann dort verbrannt werden. Der Verbrennung steht durch die eindiffundierten Sauerstoffionen genügend Sauerstoff zur Verfügung. Da aus der in der Kammer 48 verwendeten Atmosphäre lediglich der Luftsauerstoff entzogen wird, verbleibt der Luftstickstoff N₂ in der Atmosphäre und wird über den Abluftanschluß 52 abgeführt. Somit wird verhindert, daß der Luftstickstoff in die mit dem Luftsauerstoff vermischten Verbrennungsabgase gelangt, die im weiteren einem erneuten Verbrennungsprozeß zugeführt werden. Die Bildung von Stickoxiden NO_{X} im Verbrennungsprozeß wird somit sicher vermieden. Da nicht der gesamte Anteil an Luftsauerstoff durch die Zwischenwand 44 in die Kammer 46 diffundiert, kann der Anteil der Sauerstoffionen 2 O²⁻,die durch die Zwischenwand 44 hindurchtreten, erhöht werden, indem die Zwischenwand 44 mit einer porösen Metallelektrode verdichtet wird und über die Spannungsquelle U eine entsprechend gepolte Spannung angelegt wird. Da die Sauerstoffionen ein negatives Potential aufweisen, muß die Spannung so gepolt sein, daß deren Beschleunigung in Richtung der Kammer 46 erhöht wird und ein entsprechender Ladungsträgeraustausch, in der Figur 1 mit A angedeutet, stattfindet.

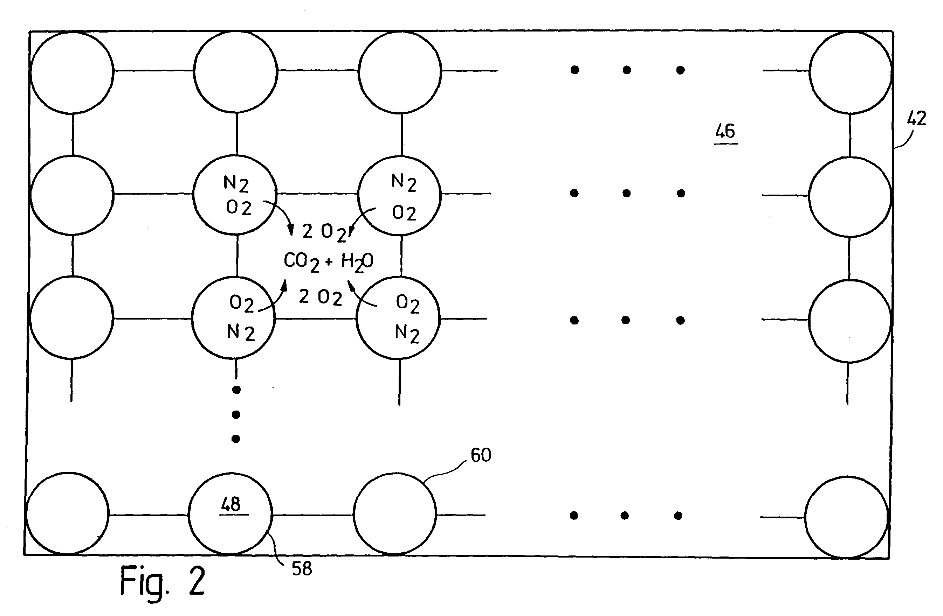

In der Figur 2 ist eine konkrete Ausgestaltungsmöglichkeit der in Figur 1 gezeigten Erweiterung 42 in einem möglichen Beispiel gezeigt. Innerhalb der Erweiterung 42, wobei diese ebenfalls beispielhaft ist und jede andere Gestaltung aufweisen kann, ist die Kammer 46 angedeutet. Durch die Kammer 46 verläuft ein Bündel einer Vielzahl einzelner, zueinander beabstandeter Rohre 58, deren Querschnitte in ihrer Gesamtheit die Kammer 48 ergeben. Die Rohre 58 sind, wie in Figur 2 nicht dargestellt, einerseits mit dem Frischluftanschluß 50 und andererseits mit dem Abluftabschluß 52 verbunden. Ein Mantel 60 der Rohre 58 bildet dabei die Zwischenwand 44.

Durch das aus den Rohren 58 bestehende Rohrsystem wird Frischluft gepumpt, während durch das Raumvolumen zwischen den einzelnen Rohren 58, also die Kammer 46, die Verbrennungsabgase vom Verbrennungsprozeß kommend, diesem wieder zugeführt werden. Aufgrund des Sauerstoffkonzentrationsunterschiedes zwischen der Atmosphärenluft im Innern der einzelnen Rohre 58 (Kammer 48) und der von den Verbrennungsabgasen durchfluteten Kammer 46 treten Sauerstoffionen durch das sauerstoffionenleitende Material des Mantels 60 hindurch und reichem die Verbrennungsabgase mit Sauerstoff an. Da der Mantel 60 (Zwischenwand 44) für den Luftstickstoff undurchlässig ist, wird der Luftstickstoff wieder über den Abluftanschluß 52 an die Umgebung abgegeben, ohne am Verbrennungsprozeß beteiligt zu sein. Hierdurch wird - wie bereits erwähnt - die Bildung von Stickoxiden NO_{X} bei Verbrennungsprozessen vermieden. Die einzelnen Rohre 58 des Rohrsystems können ebenfalls an einer entsprechend gepolten Spannungsquelle angeschlossen sein, so daß sich der Effekt des Sauerstofftransports mittels der Sauerstoffionen noch erhöht. Durch die Ausbildung der Kammer 48 und das Rohrsystem der Rohre 58 wird die zur Verfügung stehende Diffusionsfläche für die Sauerstoffionen wesentlich erhöht, so daß dem Abgas eine größere Menge an Sauerstoff zugeleitet werden kann.

Nach einem weiteren, nicht dargestellten Ausführungsbeispiel, kann eine Kammer oder ein System einzelner Rohre vorgesehen sein, dessen Mantel aus einem sauerstoffspeichernden Material, beispielsweise aus Bariumoxid BaO, besteht. Dieser Kanal oder dieses Rohrsystem sind über unschaltbare schieber entweder mit dem Frischluftanschluß 50 und dem Abluftanschluß 52 oder mit dem Abgaskanal 34 und dem Saugkanal 32 verbindbar. In einem ersten Verfahrensschritt wird hier durch den Kanal oder das Rohrsystem Frischluft gepumpt, die beispielsweise eine Temperatur von ca. 550 °C und einen Druck von ca. 2 atm aufweist. Hierdurch wird der Luftsauerstoff der Frischluft in dem aus Bariumoxid bestehenden Mantel in Form von Bariumdioxid BaO₂ gespeichert.

Nachdem die Anschlüsse zu dem Kanal oder dem Rohrsystem umgeschaltet wurden, wird durch dieses in einem nächsten Verfahrensschritt das Abgas des Verbrennungsprozesses gespült. Es weist dabei beispielsweise eine Temperatur von ca. 800 °C und einen Druck von ca. 1 atm auf. Hierbei entsteht aus dem Bariumdioxid BaO₂ Bariumoxid BaO und gasförmiger Sauerstoff O₂. Der gasförmige Sauerstoff O₂ mischt sich mit dem Abgas und kann so erneut einem Verbrennungsprozeß zugeführt werden. Da der Luftstickstoff der Frischluft nicht in dem Bariumoxid gespeichert wird und aus dem Kanal oder dem Rohrsystem vor Eintritt des Abgases ausgeleitet wurde, wird eine Teilnahme des Luftstickstoffs an dem Verbrennungsprozeß vermieden und damit das Entstehen von Stickoxiden verhindert. Anstelle des kompletten Aufbaus des Kanals oder des Rohrsystems aus Bariumoxid kann auch eine Innenbeschichtung aus Bariumoxid oder ein Einbringen von Strukturen, beispielsweise Gitterstrukturen aus Bariumoxid, vorgesehen sein.

## Patentansprüche

1. Vorrichtung zur Reduzierung von Stickoxiden in Verbrennungsabgasen bei einem mit einem Sauerstoff-Stickstoff-Luftgemisch durchgeführten Verbrennungsprozeß, mit einem mit einer Verbrennungskammer verbundenen Abgaskanal (34), dadurch gekennzeichnet, daß der Abgaskanal (34) in Strömungsrichtung mit einem in die Verbrennungskammer führenden Saugkanal (32) in Verbindung steht und daß dem Abgaskanal (34) wenigstens ein das Sauerstoff-Stickstoff-Luftgemisch führender Kanal mit einer kammer (48) und eine die Kammer (48) und den den Abgaskanal in Strömungsrichtung mit dem Saugkanal verbindenden Abschnitt (42) des Abgaskanals (34) trennende Zwischenwand (44), die selektiv für den Sauerstoff (O₂) des Sauerstoff-Stickstoff-Luftgemisches durchlässig ist, zugeordnet ist.

2. Vorrichtung nach Anspruch 1, **dadurch gekenn**zeichnet, daß die Zwischenwand (44) aus einem sauerstoffionenleitenden Material besteht.

3. Vorrichtung nach einem der vorhergehenden Ansprüche, **dadurch gekennzeichnet,** daß die Kammer (48) aus einem Bündel einzelner, zueinander beabstandeter Rohre (58) gebildet wird.

4. Vorrichtung nach einem der vorhergehenden Ansprüche, **dadurch gekennzeichnet,** daß die Zwischenwand (44) mit einer Spannungsquelle (56) verbindbar ist.

5. Vorrichtung nach Anspruch 4, **dadurch gekennzeichnet,** daß die Zwischenwand (44) mit einer porösen Metallelektrode verdichtet wird.

6. Vorrichtung nach einem der vorhergehenden Ansprüche, **dadurch gekennzeichnet,** daß der Abgaskanal (34) und die Kammer (48) einen gemeinsamen Frischluftanschluß (50), einen Abluftanschluß (52) und einen Saugkanal (32) aufweisen, die getrennt mit der Kammer (48) bzw. dem Abgaskanal (34) verbindbar sind und die Kammer (48) bzw. der Abgaskanal (34) sauerstoffspeicherndes Material aufweisen.

7. Vorrichtung nach Anspruch 6, **dadurch gekennzeichnet,** daß das sauerstoffspeichernde Material Bariumoxid (BaO) ist.

8. Verfahren zur Reduzierung von Stickoxiden in Verbrennungsabgasen, dadurch gekennzeichnet, daß die Verbrennungsabgase zumindest teilweise durch einen Kanal einer Verbrennungskammer zugeleitet werden, durch den getrennt von den Verbrennungsabgasen ein Sauerstoff-Stickstoff-Luftgemisch geleitet wird und wobei von dem Sauerstoff-Stickstoff-Luftgemisch ausschließlich der Sauerstoff dem Verbrennungsabgas zugeführt wird.

9. Verfahren nach Anspruch 8. **dadurch gekennzeichnet,** daß der Sauerstoff durch eine Zwischenwand eines das Sauerstoff-Stickstoff-Luftgemisch führenden Kanals diffundiert wird.

10. Verfahren nach Anspruch 9, **dadurch gekennzeichnet,** daß die Diffusion durch Anlegen einer entsprechend gepolten Spannung beeinflußt wird.

11. Verfahren nach Anspruch 8, dadurch gekennzeichnet, daß das Sauerstoff-Stickstoff-Luftgemisch durch ein den Kanal bildendes, Sauerstoff speicherndes Rohrsystem geführt wird und anschließend das Rohrsystem mit dem Verbrennungsabgas gespült wird.

12. Verfahren nach Anspruch 11, **dadurch gekennzeichnet,** daß das Sauerstoff-Stickstoff-Luftgemisch mit einer Temperatur von 500 °C bis 600 °C, insbesondere ca. 550 °C und einem Druck von 1,5 atm bis 2,5 atm, insbesondere ca. 2 atm, durch das Rohrsystem geleitet wird.

13. Verfahren nach Anspruch 11, **dadurch gekennzeichnet,** daß die Verbrennungsabgase mit einer Temperatur von 750 °C bis 850 °C, insbesondere ca. 800 °C und einem Druck von ca. 1 atm durch das Rohrsystem geleitet werden.

## Claims

1. Device for the abatement of nitrogen oxides in combustion exhaust gases in the case of a combustion process carried out with an oxygen-nitrogen-air mixture, having an exhaust-gas channel (34) connected to a combustion chamber, characterized in that the exhaust-gas channel (34) is connected in the flow direction to an intake channel (32) leading into the combustion chamber, and in that the exhaust-gas channel (34) is assigned at least one channel which carries the oxygen-nitrogen-air mixture and has a chamber (48), and a partition wall (44) which separates the chamber (48) and that section (42) of the exhaust-gas channel (34) which connects the exhaust-gas channel in the flow direction to the intake channel, and is selectively permeable to the oxygen (O₂) of the oxygen-nitrogen-air mixture.

2. Device according to Claim 1, characterized in that the partition wall (44) consists of a material exhibiting oxygen ion conduction.

3. Device according to one of the preceding claims, characterized in that the chamber (48) is formed by a bundle of individual tubes (58) separated from one another.

4. Device according to one of the preceding claims, characterized in that the partition wall (44) can be connected to a voltage source (56).

5. Device according to Claim 4, characterized in that the partition wall (44) is consolidated with a porous metal electrode.

6. Device according to one of the preceding claims, characterized in that the exhaust-gas channel (34) and the chamber (48) have a shared fresh-air connection (50), an exhaust-air connection (52) and an intake channel (32), which can be connected separately to the chamber (48) or to the exhaust-gas channel (34) and the chamber (48) or the exhaust-gas channel (34) comprise oxygen-accumulating material.

7. Device according to Claim 6, characterized in that the oxygen-accumulating material is barium oxide (BaO).

8. Method for the abatement of nitrogen oxides in combustion exhaust gases, characterized in that at least some of the combustion exhaust gases are fed through a channel to a combustion chamber, through which an oxygen-nitrogen-air mixture is fed separately from the combustion exhaust gases, and exclusively the oxygen being fed from the oxygen-nitrogen-air mixture to the combustion exhaust gas.

9. Method according to Claim 8, characterized in that the oxygen is diffused through a partition wall of a channel carrying the oxygen-nitrogen-air mixture.

10. Method according to Claim 9, characterized in that the diffusion is controlled by applying a correspondingly poled voltage.

11. Method according to Claim 8, characterized in that the oxygen-nitrogen-air mixture is fed through an oxygen-accumulating tube system forming the channel, and the tube system is subsequently flushed with the combustion exhaust gas.

12. Method according to Claim 11, characterized in that the oxygen-nitrogen-air mixture is fed through the tube system at a temperature of from 500°C to 600°C, in particular about 550°C, and at a pressure of from 1.5 atm to 2.5 atm, in particular about 2 atm.

13. Method according to Claim 11, characterized in that the combustion exhaust gases are fed through the tube system at a temperature of from 750°C to 850°C, in particular about 800°C, and at a pressure of about 1 atm.

## Revendications

1. Dispositif servant à la réduction des oxydes d'azote dans les gaz d'échappement issus d'une combustion, dans le cas d'un processus de combustion effectué avec un mélange d'oxygène et d'azote de l'air, dispositif comprenant un canal de gaz d'échappement (34) relié à une chambre de combustion,
caractérisé en ce que
• le canal des gaz d'échappement (34) est en liaison dans le sens de l'écoulement avec un canal d'admission (32) qui va à la chambre de combustion, et
• on associe au canal des gaz d'échappement (34) au moins un canal qui fait passer le mélange d'oxygène et d'azote de l'air, avec une chambre (48), et une cloison intermédiaire (44) qui sépare la chambre (48) et la section de liaison (42) du canal des gaz d'échappement (34), reliant celui-ci dans le sens de l'écoulement au canal d'admission, cloison intermédiaire qui est perméable de façon sélective à l'oxygène (O2) du mélange d'oxygène et d'azote de l'air.

2. Dispositif selon la revendication 1,
caractérisé en ce que
la cloison intermédiaire (44) est réalisée en une matière qui conduit les ions oxygène.

3. Dispositif selon l'une des revendications précédentes,
caractérisé en ce que
la chambre (48) est formée par un faisceau de tubes individuels (58), situés à une certaine distance les uns des autres.

4. Dispositif selon l'une des revendications précédentes,
caractérisé en ce que
la cloison intermédiaire (44) peut être reliée à une source de tension (56).

5. Dispositif selon la revendication 4,
caractérisé en ce que
la cloison intermédiaire (44) est compressée avec une électrode métallique poreuse.

6. Dispositif selon l'une des revendications précédentes,
caractérisé en ce que
• le canal des gaz d'échappement (34) et la chambre (48) présentent un raccord commun (50) d'air frais, un raccord d'évacuation de l'air utilisé (52) et un canal d'admission (32) qui peuvent être reliés de façon séparée à la chambre (48) ou au canal des gaz d'échappement (34), et
• la chambre (48) ou le canal des gaz d'échappement (34) présentent une matière qui emmagasine l'oxygène.

7. Dispositif selon la revendication 6,
caractérisé en ce que
la matière qui emmagasine de l'oxygène est de l'oxyde de baryum (BaO).

8. Procédé servant à la réduction d'oxydes d'azote dans des gaz d'échappement, issus d'une combustion,
caractérisé en ce que
les gaz d'échappement issus de la combustion sont amenés au moins en partie à travers un canal à une chambre de combustion, canal à travers lequel est amené un mélange d'air et d'oxygène de l'air de façon séparée par rapport aux gaz d'échappement, issus de la combustion, et dans lequel l'oxygène provenant exclusivement du mélange d'oxygène et d'azote de l'air est amené aux gaz d'échappement issus de la combustion.

9. Procédé selon la revendication 8,
caractérisé en ce que
l'oxygène est diffusé à travers une cloison intermédiaire d'un canal qui fait passer le mélange d'oxygène et d'azote de l'air.

10. Procédé selon la revendication 9,
caractérisé en ce que
la diffusion est influencée par l'application d'une tension de polarité correspondante.

11. Procédé selon la revendication 8,
caractérisé en ce que
• le mélange d'oxygène et d'azote de l'air est amené à travers un système de tuyauterie formant le canal, qui emmagasine de l'oxygène, et ensuite
• le système de tuyauterie est rincé par les gaz d'échappement issus de la combustion.

12. Procédé selon la revendication 11,
caractérisé en ce que
le mélange d'oxygène et d'azote de l'air est amené à une température de 500°C à 600° C, en particulier de 550°C environ et à une pression allant de 1,5 atm. à 2,5 atm., en particulier de 2 atm. environ, à travers le système de tuyauterie.

13. Procédé selon la revendication 11,
caractérisé en ce que
les gaz d'échappement, issus de la combustion, sont amenés à une température de 750°C à 850° C, en particulier de 800°C environ et à une pression d'une atmosphère environ, à travers le système de tuyauterie.
